# EUROPEAN PATENT SPECIFICATION

(11) **EP 1 314 635 B1**
(45) Date of publication and mention of the grant of the patent: **10.06.2009**
(21) Application number: 02025613.7
(22) Date of filing: 18.11.2002
(51) Int. Cl.: B62K 11/04, B62J 17/00

(54) **Scooter-type motorcycle**
Rollerartiges Motorrad
Motocyclette du type scooter

(30) Priority: 22.11.2001 JP 2001357574; 22.11.2001 JP 2001357570; 22.11.2001 JP 2001357568
(43) Date of publication of application: 28.05.2003
(73) Proprietor: HONDA GIKEN KOGYO KABUSHIKI KAISHA, Minato-ku, Tokyo (JP)
(72) Inventor: Takenaka, Masahiko, Kabushiki Kaisha Honda Gijutsu Kenkyusho, Wako-shi, Saitama (JP)
(74) Representative: Liska, Horst

(56) References cited:
- EP-A- 0 952 075
- US-A- 4 621 680
- US-A- 6 073 719
- PATENT ABSTRACTS OF JAPAN vol. 2000, no. 21, 3 August 2001 (2001-08-03) & JP 2001 088763 A (SUZUKI MOTOR CORP), 3 April 2001 (2001-04-03)
- PATENT ABSTRACTS OF JAPAN vol. 1999, no. 09, 30 July 1999 (1999-07-30) & JP 11 099980 A (HONDA MOTOR CO LTD), 13 April 1999 (1999-04-13)

## Description

The present invention relates to a scooter-type motorcycle according to the preamble of claim 1, in which a V-type engine is covered with a body cover provided with a pair of right and left footrests and a floor tunnel rising upward between the footrests.

Heretofore, such a scooter-type motorcycle is already known in Japanese published unexamined patent application JP 2001-88763 for example and others and in the scooter-type motorcycle disclosed in the patent application, an engine is mounted in a body frame in a condition that a pair of cylinders form V type with them inclined forward.

In the conventional type scooter-type motorcycle, an engine is covered with a body cover, running wind taken in from the front of the body cover passes the engine and is exhausted from the rear of the body cover. Therefore, air warmed by heat radiation from the engine has an effect upon a fuel tank arranged on the rear side of the engine and an intake system arranged in the same space as the engine, the effect may have a critical effect upon the performance of the engine, it makes the realization of a high-out engine difficult and it is difficult to maintain the comfort of a rider and a fellow passenger in thermal environment.

Furthermore, to increase the displacement and output of an engine, the volume of an air cleaner is required to be set to a fully large value, however, in the conventional type, a pair of cylinders with which a V-type engine is provided are arranged in V type in a state inclined forward when the cylinders are viewed from the side and an air cleaner is arranged between the upper cylinder of both cylinders and a head pipe at the front end of a body frame. Therefore, the air cleaner is surrounded in all directions, it is difficult to fully secure the volume of the air cleaner and there is a limit in increasing the displacement and output of the engine. As the air cleaner is arranged in a position in which running wind is prevented from coming into the body cover from the upside of a front fender, the deterioration of the cooling performance of the engine is caused.

Furthermore, in the conventional type, as an angle between both cylinders is set to a small value and the width of the engine in a direction along an axis of a crankshaft is required to be relatively large to avoid interference between both cylinders, the body width of the front is also required to be large.

It is an object of the invention to provide a scooter-type motorcycle in which the volume of an air intake system can be fully secured.

It is a further object to provide a scooter-type motorcycle the body width of the front of which can be set to a relatively small value.

The above objects are achieved by a scooter-type motorcycle having the features of claim 1.

The invention is based upon a scooter-type motorcycle in which a V-type engine is covered with a body cover provided with a pair of right and left footrests and a floor tunnel rising upward between the footrests and in which a pair of cylinders with which the engine is provided is arranged along the inside face of the floor tunnel. Preferably, a partition wall may be provided which covers the engine from the upside and forms a running wind passage between the partition wall and the inside face of the body cover and is fixed in the body cover.

According to such configuration, as the running wind passage is formed in an upper part of the floor tunnel by partitioning the engine which is an exothermic source and the floor tunnel by the partition wall, accessories can be cooled by running wind by arranging the accessories influenced by heat in the running wind passage and heat from the engine can be prevented from having an effect upon the accessories. As the engine is doubly covered with the partition wall and the body cover, it can also contribute to the reduction of noise and can also contribute to the enhancement of the comfort of a rider in thermal environment.

Preferably, the partition wall is provided between the V-type engine the crank axis of which is arranged sideways and an air cleaner connected to the engine and according to such configuration, a dedicated heat insulator is not required to be particularly provided, an effect upon the air cleaner by heat from the engine can be inhibited and the output of the engine is never deteriorated by the rise of intake temperature.

Preferably, the partition wall is extended up to the downside of a seat for a rider provided to the rear of a body cover and at least either a fuel tank or a housing box is arranged between the seat for a rider and the rear of the partition wall and according to such configuration, heat from an engine can be prevented from having an effect upon at least either the fuel tank or the housing box, in the case of the fuel tank, the deterioration of fuel and the instability of a flow rate can be prevented from being caused and in the case of the housing box, heat can be prevented from having an effect upon a thing housed in the housing box.

Preferably, a radiator is arranged below the partition wall and according to such configuration, heat radiation from the radiator can be prevented from having an effect upon other accessories.

Preferably, the scooter-type motorcycle comprises an air cleaner which is provided with a cleaner case forming a part of the floor tunnel and extended longitudinally and which is arranged over a cylinder head connected to the cylinder.

According to such configuration, as the air cleaner is arranged over the cylinder head connected to the cylinder having a cylinder axis inclined upward forward and the cleaner case of the air cleaner forms a part of the floor tunnel and is extended longitudinally, the volume of the air cleaner is fully secured, keeping ride comfort which is an advantage of a scooter-type motorcycle and the displacement and output of the engine can be increased. In addition, as the air cleaner does not interrupt the front of the engine, the cooling performance by running wind of the engine can be enhanced and further, ease of maintenance around the cylinder head in the engine can be also enhanced.

Preferably, a radiator is arranged in the front of the cylinder and according to such configuration, an air cleaner and the radiator can be efficiently arranged along space among an engine, a front wheel and a floor tunnel.

Preferably, the cleaner case is provided with a case front vertically extended and a case rear extended backward from the downside of the case front and is formed substantially in L type when the cleaner case is viewed from the side and according to such configuration, space at the back of a head pipe at the front end of a body frame can be largely secured as space on the side of an unpurified chamber in an air cleaner and it can contribute to the reduction of intake noise and the enhancement of the output of an engine.

Preferably, an intake of the air cleaner is open at the back of a head pipe with which a body frame is provided at the front end and according to such configuration, the intake of dust into the air cleaner can be possibly avoided.

The invention is based upon a scooter-type motorcycle in which a V-type engine provided with a pair of cylinders arranged in v type when the cylinders are viewed from the side and a pair of cylinder heads connected to the cylinders is covered with a body cover where a pair of right and left footrests and a floor tunnel rising upward between the footrests are formed and is characterized in that both cylinders of the engine are arranged longitudinally with the cylinders directed upward along the inside face of the floor tunnel.

According to such configuration, as both cylinders of the engine are directed upward longitudinally and are arranged along the inside face of the floor tunnel, an angle between both cylinders can be set to a large value, even if the width of the engine in a direction along the axis of a crankshaft is set to a relatively small value, no interference is caused between both cylinders, therefore, the engine can be arranged close to the front, setting the body width of the front to a relative small value and driving performance in a sport mode can be enhanced. In addition, as the width of the floor tunnel can be set to a relatively small value, the width of the footrest can be secured and the ride comfort can be enhanced.

Moreover, according to the invention, an intake system is connected to the respective one sides between both cylinder heads of both cylinder heads, wherein an exhaust system may be connected to the other sides of both cylinder heads and according to such configuration, the intake system can be arranged in a floor tunnel and the exhaust system can be arranged in space before and after an engine reasonably.

Preferably, an air cleaner forming a part of the intake system is arranged along the floor tunnel and according to such configuration, the performance of an engine can be enhanced, securing the length and the volume of an intake pipe of the intake system enough.

Referring to the attached drawings, embodiments of the invention will be described below, in which:
Fig. 1 is a side view showing a scooter-type motorcycle equivalent to a first embodiment;
Fig. 2 is a longitudinal side view showing the scooter-type motorcycle in a state in which a part of a body cover is omitted;
Fig. 3 is an enlarged longitudinal side view showing a main part of the part shown in Fig. 1;
Fig. 4 is an enlarged sectional view showing an engine viewed along a line 4-4 in Fig. 3;
Fig. 5 is a sectional view viewed along a line 5-5 in Fig. 3;
Fig. 6 is a sectional view viewed along a line 6-6 in Fig. 3;
Fig. 7 is a general side view showing the engine, an intake system and an exhaust system;
Fig. 8 is a schematic plan showing a transmission between the engine and a rear wheel, the intake system and the exhaust system;
Fig. 9 is an enlarged sectional view viewed along a line 9-9 in Fig. 2;
Fig. 10 is viewed from a direction of an arrow 10 in Fig. 4;
Fig. 11 is a plan showing the scooter-type motorcycle a part of which is cut out;
Fig. 12 is a plan showing a partition wall;
Fig. 13 is a longitudinal side view showing a forth embodiment corresponding to Fig. 2; and
Fig. 14 is a longitudinal side view showing a fifth embodiment corresponding to Fig. 2.

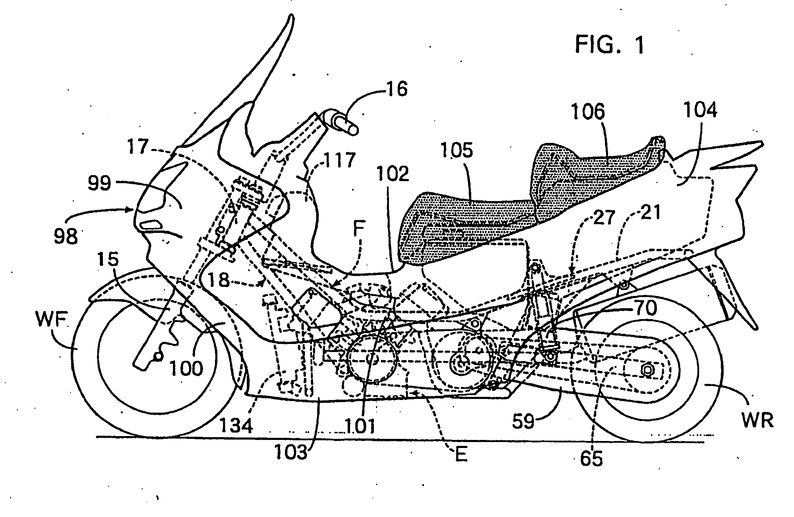

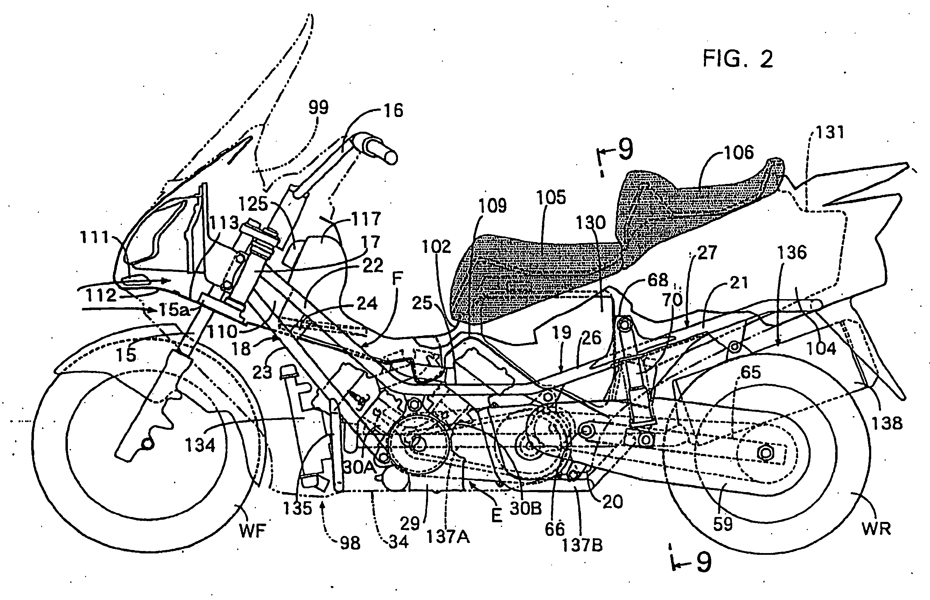

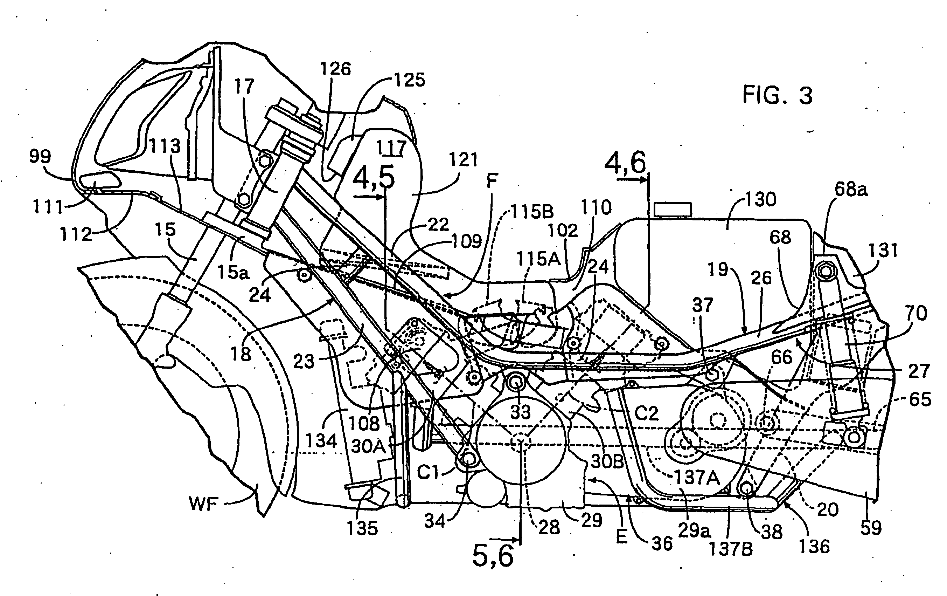

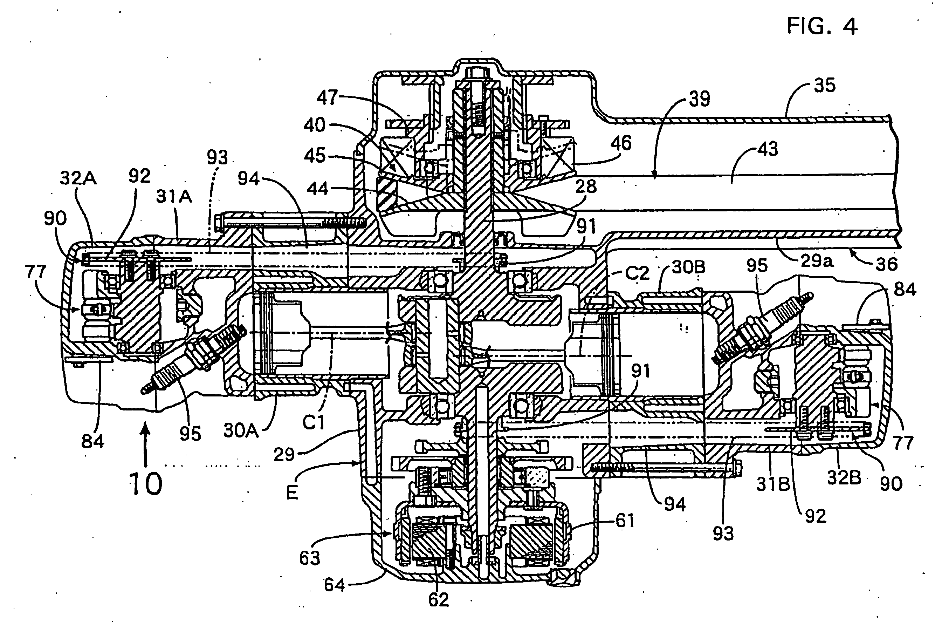

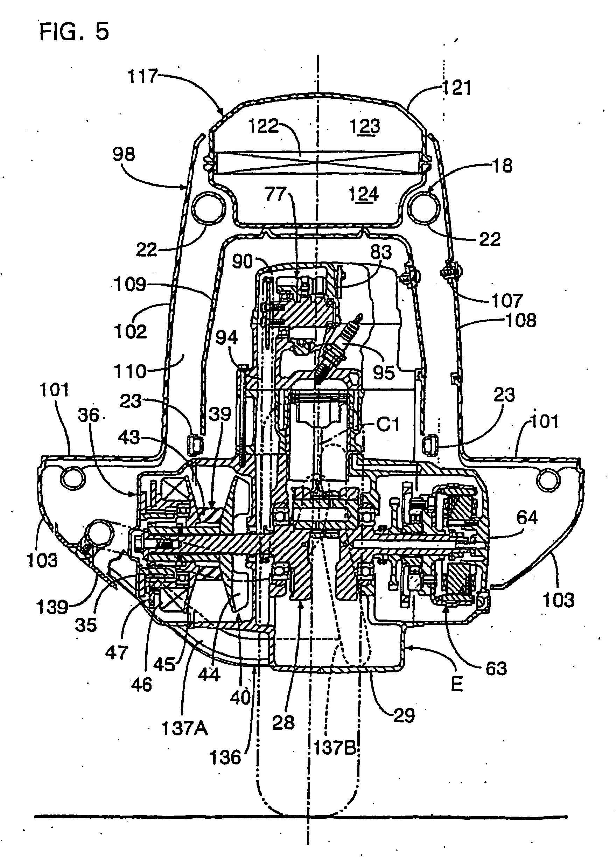

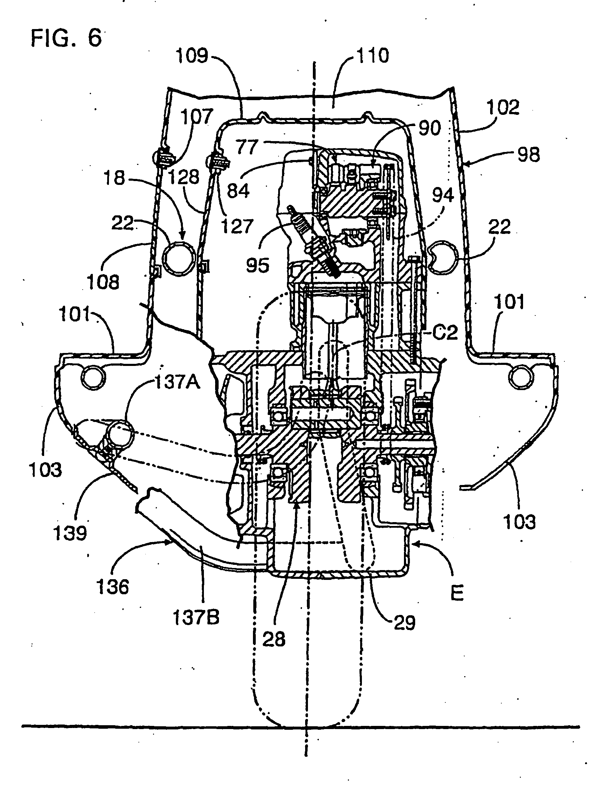

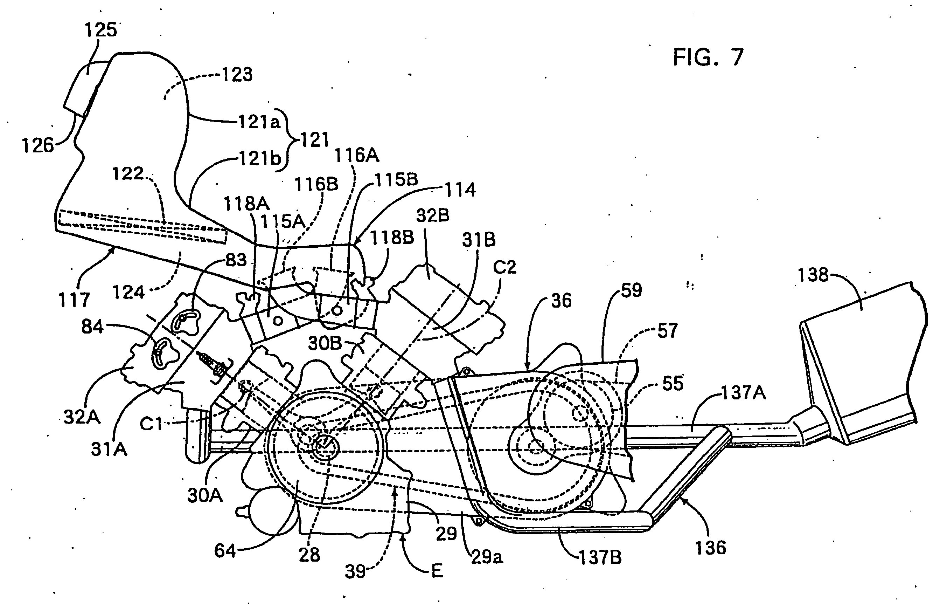

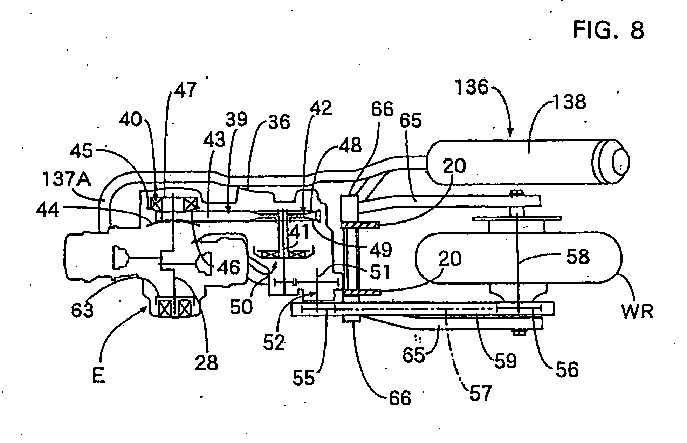

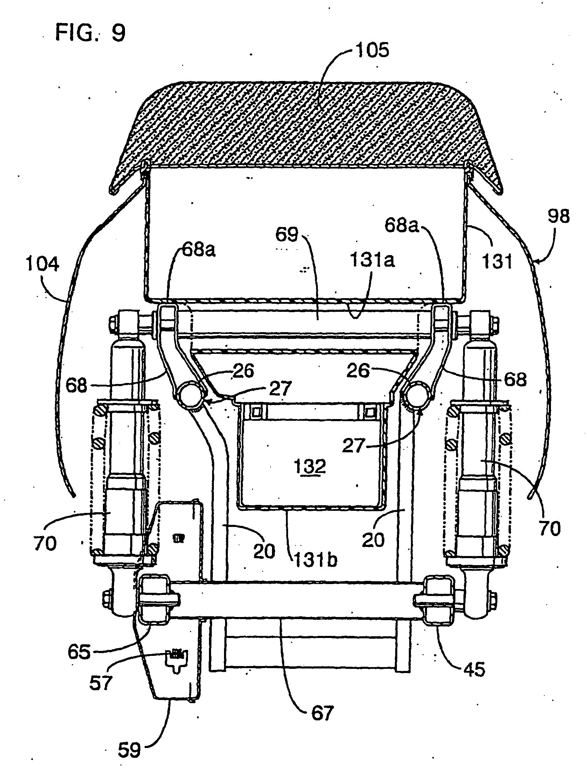

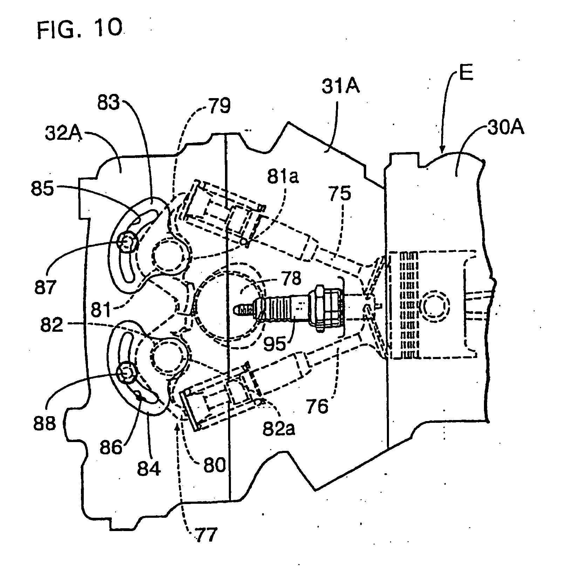

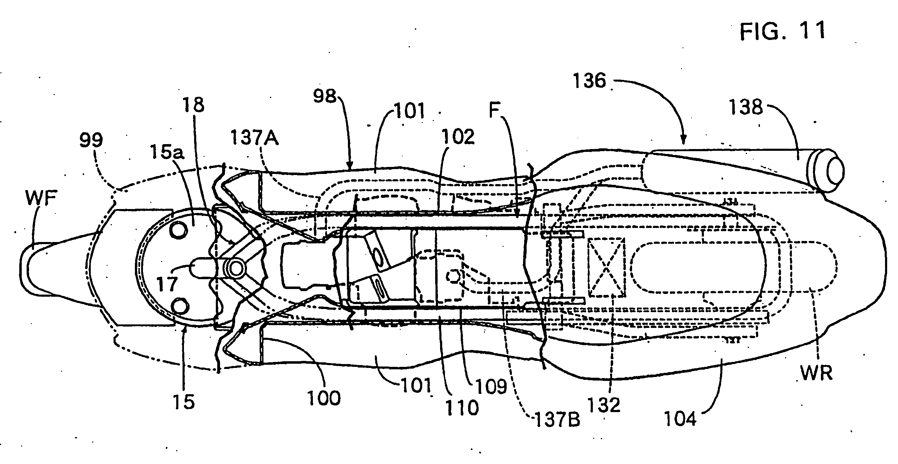

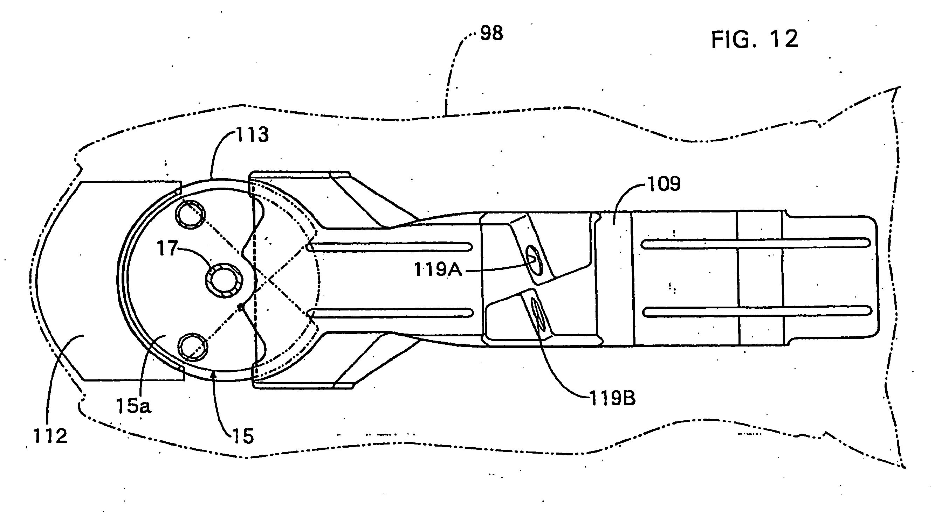

Figs. 1 to 12 show a first embodiment of the invention, Fig. 1 is a side view showing a scooter-type motorcycle, Fig. 2 is a longitudinal side view showing the scooter-type motorcycle in a state in which a part of a body cover is omitted, Fig. 3 is an enlarged longitudinal side view showing a main part in Fig. 1, Fig. 4 is an enlarged sectional view showing an engine viewed along a line 4-4 in Fig. 3, Fig. 5 is a sectional view viewed along a line 5-5 in Fig. 3, Fig. 6 is a sectional view viewed along a line 6-6 in Fig. 3, Fig. 7 is a general side view showing the engine, an intake system and an exhaust system, Fig. 8 is a schematic plan showing a transmission system, the intake system and the exhaust system between the engine and a rear wheel, Fig. 9 is an enlarged sectional view viewed along a line 9-9 shown in Fig. 2, Fig. 10 is viewed from a direction shown by an arrow 10 shown in Fig. 4, Fig. 11 is a plan showing the scooter-type motorcycle a part of which is cut out and Fig. 12 is a plan showing a partition wall.

First, as shown in Figs. 1 to 3, a body frame F of the scooter-type motorcycle is provided with a head pipe 17 that supports a front fork 15 for supporting a front wheel WF and a steering handlebar 16 coupled to the front fork 15 so that the front fork and the steering handlebar can be steered, a pair of right and left down frame parts 18 extended downward in the rear from the head pipe 17, a pair of right and left extended frame parts 19 extended backward from the upside of each rear end of both down frame parts 18, a pair of right and left supporting frames 20 extended downward in the front from each rear end of the extended frame parts 19 and a pair of right and left inclined frames 21 which are connected to each rear end of the extended frame parts 19, which are extended upward in the rear and the rear ends of which are mutually coupled.

The down frame part 18 is composed of an upper down frame 22 extended downward in the rear from the head pipe 17, a lower down frame 23 lower than the upper down frame 22 and extended downward in the rear from the head pipe 17 and a coupling frame 24 coupling the upper and lower down frames 22 and 23, and is coupled to the head pipe 17 so that the down frame part is linearly extended when it is viewed from the side.

The extended frame part 19 is provided with a horizontal frame 25 integrated with the rear end of the upper down frame 22 and substantially horizontally extended backward and an inclined frame 26 integrated with the rear end of the horizontal frame 25 and extended upward backward.

The front end of the inclined frame 21 is coupled to the rear end of the inclined frame 26 of the extended frame part 19 so that the front end linearly ranges and both inclined frames 26 and 21 form a rear frame 27.

As shown in Figs. 4 to 8, the engine E is provided with a crankcase 29 that supports a rotatable crankshaft 28 having an axis bilaterally extended, a first cylinder 30A having a first cylinder axis C1 extended upward in the front from the crankcase 29 and coupled to the crankcase 29, a second cylinder 30B having a second cylinder axis C2 extended upward in the rear from the crankcase 29 and coupled to the crankcase 29, a first cylinder head 31A coupled to the first cylinder 30A, a second cylinder head 31B coupled to the second cylinder 30B, a first head cover 32A coupled to the first cylinder head 31A on the reverse side to the first cylinder 30A and a second head cover 32B coupled to the second cylinder head 31B on the reverse side to the second cylinder 30B, and is formed by V-type two cylinders that the first and second cylinders 30A and 30B are arranged longitudinally with them directed upward for example.

The down frame part 18 out of the body frame F is formed so that the down frame part is extended linearly when the down frame part is viewed from the side between the front first cylinder 30A out of both cylinders 30A and 30B and the head pipe 17 and the down frame parts are arranged on both sides of the front first cylinder 30A.

The extended frame parts 19 extended backward from the down frame parts 18 are extended backward from the upside of the first cylinder 30A via both sides of the rear second cylinder 30B.

The upside of the crankcase 29 is fastened and supported to/by the rear end of the upper down frame 22 of the down frame part 18 via a bolt 33 and the front of the crankcase 29 is fastened and supported to/by the rear end of the lower down frame 23 of the down frame part 18 via a bolt 34.

An extended case part 29a extended backward is integrated with the crankcase 29 on the right side in a direction in which the motorcycle travels and a transmission case 36 is formed by a right cover 35 fastened to the extended case part 29a and the extended case part 29a. The transmission case 36 is fastened and supported to/by the front end of the inclined frame 26 out of the extended frame part 19 of the body frame F via a bolt 37 and is fastened and supported to/by the lower end of the supporting frame 20 via a bolt 38.

A belt-type continuously variable transmission 39 for shifting the rotating power of the crankshaft 28 steplessly and transmitting to the side of the rear wheel WR is housed in the transmission case 36. The continuously variable transmission 39 is provided with a transmission pulley on the driving side 40 as rotating means installed at one end facing the transmission case 36 of the crankshaft 28, a transmission pulley on the driven side 42 installed at one end facing the transmission case 36 of a rotatable transmission shaft 41 having an axis parallel to the crankshaft 28 and supported by the rear of the transmission case 36 and a belt 43 without an end wound onto the transmission pulley on the driving side 40 and the transmission pulley on the driven side 42.

The transmission pulley on the driving side 40 is composed of a fixed pulley half 44 fixed to the crankshaft 28, a movable pulley half 45 which can approach the fixed pulley half 44 or separate from it, which is supported by the crankshaft 28 so that the movable pulley half can be slid and which is pressed on the side of the fixed pulley half 44 by a spring and a centrifugal mechanism 46 which exercises force for pressing the movable pulley half 45 on the side of the fixed pulley half 44 as the number of revolutions of the crankshaft 28 increases. Therefore, the fixed pulley half 44 is arranged closer to the side of the crankcase 29, that is, the second cylinder 30B than the movable pulley half 45 and the centrifugal mechanism 46 is provided between a ramp plate 47 fixed to the crankshaft 28 on the reverse side to the fixed pulley half 44 based upon the movable pulley half 45 and the movable pulley half 45.

The transmission pulley on the driven side 42 is composed of a fixed pulley half 48 supported by the transmission shaft 41 so that the fixed pulley half can be relatively rotated with the position in an axial direction fixed and a movable pulley half 49 which can approach the fixed pulley half 48 or separate from it, which is supported,by the transmission shaft 41 so that the movable pulley half can be slid and can be relatively rotated and which is pressed on the side of the fixed pulley half 48 by a spring, and the fixed pulley half 48 is arranged closer to the side of the crankcase 29, that is, the second cylinder 30B than the movable pulley half 49.

A centrifugal clutch 50 is provided between the movable pulley half 49 and the transmission shaft 41 and connects the movable pulley half 49 and the transmission shaft 41 as the number of revolutions of the movable pulley half 49 is equal to or exceeds a predetermined value.

An output shaft 51 one end of which faces the transmission case 46 is supported by the rear of the transmission case 46 so that the output shaft can be rotated around an axis parallel to the transmission shaft 41 and is coupled to the other end of the transmission shaft 41 via a gear train 52.

The other end of the output shaft 51 is protruded from the extended case part 29a of the transmission case 36 on the left side in the direction in which the motorcycle travels and a driving sprocket 55 is fixed to a part of the output shaft 51 protruded from the transmission case 36. In the meantime, a driven sprocket 56 is fixed to an axle 58 of the rear wheel WR on the left side in the direction in which the motorcycle travels and a chain without an end 57 is wound onto the driving sprocket 55 and the driven sprocket 56. In addition, the driving sprocket 55, the driven sprocket 56 and the chain 57 are covered with a chain case 59.

Therefore, the power of the engine E shifted steplessly by the continuously variable transmission 39 is transmitted to the axle 58 of the rear wheel WR via the driving sprocket 55, the chain 57 and the driven sprocket 56.

The other end of the crankshaft 28 is protruded from the crankcase 29 on the left side in the direction in which the motorcycle travels and an AC generator 63 is formed by a rotor 61 fixed to the other end of the crankshaft 28 and a stator 62 housed in the rotor 61. The AC generator 63 is covered with a left cover 64 connected to the crankcase 29 and the stator 62 is fixed to the left cover 64.

Both ends of the axle 58 of the rear wheel WR are supported by each rear end of a pair of right and left rocking arms 65, 65 and each front end of these rocking arms 65, 65 is supported by the supporting frame 20 of the body frame F via a spindle 66 parallel to the axle 58 slightly on the rear side of the transmission case 36 so that each front end can fluctuate. In addition, as clearly shown in Fig. 9, the rocking arm 65 arranged on the light side in the direction in which the motorcycle travels out of both rocking arms 65, 65 is housed in the chain case 59 and the respective intermediate parts of both rocking arms 65, 65 are mutually coupled by a coupling pipe 67 that pierces the inside wall of the chain case 59.

As shown in Fig. 9, each stay 68, 68 rising upward from the rear frame 27 is fastened to an articulated section of the inclined frames 26 and 21 in the body frame F, that is, an intermediate part of the rear frame 27. Both stays 68, 68 are bent so that an interval between the stays 68, 68 becomes large upward and parts in which the interval between the stays 68, 68 is maximum, that is, the upper ends of the stays 68, 68 are mutually coupled by a cross member 69.

The upper ends of rear cushion units 70, 70 arranged outside the stays 68, 68 and the rocking arms 65, 65 are coupled to the upper ends of the stays 68, 68 on extended parts of both ends of the cross member 69 and the lower ends of the rear cushion units 70, 70 are coupled to the outsides of intermediate parts of the rocking arms 65, 65. That is, the rear cushion units 70, 70 are provided between the intermediate parts of both rocking arms 65, 65 supporting the rear wheel WR and the rear frames 27, 27 of the body frame F.

As shown in Fig. 10, the engine E is an SOHC-type engine, and a valve system 77 for opening or closing an intake valve 75 and an exhaust valve 76 respectively arranged in each cylinder head 31A, 31B and respectively pressed in a direction in which each valve is closed by a spring is housed between the first and second cylinder heads 31A and 31B and between the first and second head covers 32A and 32B.

The valve system 77 is provided with a camshaft 78 rotatable around an axis parallel to the crankshaft 28, a rocker arm on the intake side 79 for opening or closing the intake valve 75 and a rocker arm on the exhaust side 80 for opening or closing the exhaust valve 76 according to a cam with which the camshaft 78 is provided.

The rocker arms on the intake side and on the exhaust side 79 and 80 can be turned around the axis parallel to the camshaft 78 and are supported by eccentric shanks 81a, 82b of rocker arm shafts 81, 82 supported by the head covers 32A, 32B so that the rocker arms on the intake side and on the exhaust side can be rocked, and tappet clearance can be adjusted by adjusting turned positions of the rocker arm shafts 81, 82.

Substantially fan-shaped adjusting members 83, 84 connected to each one end of the rocker arm shafts 81, 82 are arranged along the outside face of each cylinder head 31A, 31B, bolts 87, 88 are inserted into long holes 85, 86 provided to each adjusting member 83, 84 along each virtual circular arc with each axis of the rocker arm shafts 81, 82 in the center and are screwed to the head covers 32A, 32B.

That is, after the bolts 87, 88 are loosened and the adjusting members 83, 84 are turned, the bolts 87, 88 are tightened, the turned positions of the adjusting members 83, 84 and the rocker arm shafts 81, 82 are fixed and tappet clearance between the intake valve 75 and a tappet and between the exhaust valve 76 and a tappet can be adjusted.

As shown in Figs. 4 to 6, a timing transmission mechanism 90 that transmits the rotating power of the crankshaft 28 to the camshaft 77 at the speed reducing ratio of 1/2 is provided between the camshaft 77 of the valve system 77 and the crankshaft 28 and is provided with a driving sprocket 91 fixed to the crankshaft 28, a driven sprocket 92 fixed to the camshaft 77 and a cam chain without an end 93 wound onto the driving and driven sprockets 91, 92.

A cam chain chamber 94 for running the cam chain 93 is formed in a part from the crankcase 29 to the first head cover 32A via the first cylinder 30A and the first cylinder head 31A and in a part from the crankcase 29 to the second head cover 32B via the second cylinder 30B and the second cylinder head 31B.

The second cylinder axis C2 of the second cylinder 30B is arranged on the reverse side to the belt-type continuously variable transmission 39 with the first cylinder axis C1 of the first cylinder 30A between the second cylinder axis and the belt-type continuously variable transmission, the cam chain chamber 94 on the side of the second cylinder 30B is arranged on the reverse side to the belt-type continuously variable transmission 39 based upon the second cylinder axis C², that is, on the left side in the direction in which the motorcycle travels and the cam chain chamber 94 on the side of the first cylinder 30A is arranged between the first cylinder axis C1 and the belt-type continuously variable transmission 39.

Spark plugs 95, 95 are attached to the cylinder heads 31A, 31B and are arranged on the reverse sides of the cam chain chambers 94 based upon the cylinder axes C1, C2 of the cylinders 30A, 30B. In addition, the adjusting members 83, 84 for adjusting tappet clearance in each valve system 77 are also arranged on the reverse sides of the cam chain chambers 94 and on the outside faces of the head covers 32A, 32B.

As also shown in Fig. 11, the body frame F including the engine E is covered with a body cover 98 made of synthetic resin and the body cover 98 is provided with a front cover 99 covering the front of the head pipe 17 and the upside of the front wheel WF, a pair of right and left leg shields 100 bounded to both right and left sides of the front cover 99 for covering the fronts of legs of a rider, a pair of right and left footrests 101 connected to the leg shields 100 to support the feet of the rider, a floor tunnel 102 rising upward between the footrests 101, skirts hanging downward from the outside edges of both footrests 101 and a rear cover 104 covering both right and left sides of the rear of the body frame F and bonded to the footrests 101 and the floor tunnel 102.

A seat for a rider 105 on which the rider is seated and a seat for a passenger on which a fellow passenger is seated 106 are provided on the rear cover 104 so that they can be opened and the seat for a passenger 106 is arranged on the upside in the rear of the seat for a rider 105.

The first and second cylinders 30A, 30B in the engine E are arranged longitudinally with them directed upward along the inside face of the floor tunnel 102 in the body cover 98, an opening 107 corresponding to the adjusting members 83, 84 and the spark plug 95 on the side of the first cylinder 30A and an opening 107 corresponding to the adjusting members 83, 84 and the spark plug 95 on the side of the second cylinder 30B are provided on both sides of the floor tunnel 102, and the openings 107, 107 are closed by lid members 108, 108 attached to the floor tunnel 102 so that the lid members can be detached.

In the body cover 98, a partition wall 109 covering the engine E from the upside is fixed so that a running wind passage 110 is formed between the partition wall and the body cover 98.

As clearly shown in Figs. 2 and 3, a running wind inlet 111 is provided to a lower part of the front of the front cover 99 in the body cover 98, a front cover air intake guide 112 is provided at the bottom of the front cover 99 to guide running wind guided from the running wind inlet 111 into the body cover 98 to the side of the running wind passage 110 and a bottom bridge air intake guide 113 is provided between the front cover air intake guide 112 and the front end of the partition wall 109.

The bottom bridge air intake guide 113 is fixed onto a bottom bridge 15a of the front fork 15 and is formed in a circle with an axis of the turn of the front fork 15 in the center as shown in Fig. 12. In addition, a part of the periphery of the slidable bottom bridge air intake guide 113 is overlapped with the rear of the front cover air intake guide 112 and the rear of the bottom bridge air intake guide 113 is housed in the front of the partition wall 109. Therefore, running wind guided from the running wind inlet 111 into the body cover 98 is securely guided to the side of the running wind passage 110 via the front cover air intake guide 112 and the bottom bridge air intake guide 113 independent of the steering operation of the front fork 15 and the steering handlebar 16.

An intake system 114 of the engine E is provided with throttle bodies 115A, 115B the downstream ends of which are connected to each one side of the cylinder heads 31A, 31B on the side between the first and second cylinder heads 31A, 31B with which the engine E is provided, intake pipes 116A, 116B connected to the respective upstream ends of both throttle bodies 115A, 115B and an air cleaner 117 to which the intake pipes 116A, 116B are connected in common and which is arranged over the first cylinder head 31A as clearly shown in Fig. 7, and fuel injection valves 118A, 118B are attached to the cylinder heads 31A, 31B in each connection of the throttle bodies 115A, 115B.

The partition wall 109 pierces an intermediate part of each intake pipe 116A, 116B and vertically partitions the intake system 114, and through holes 119A, 119B for piercing both intake pipes 116A, 116B are provided in an intermediate part of the partition wall 109. In addition, the intake pipes 116A, 116B are curved so that the intake pipes cross when they are viewed from the side to substantially equalize distance from the air cleaner 117 to each throttle body 115A, 115B, the through hole 119A is provided to the partition wall 109 so that the through hole pierces the intake pipe 116A from the front and the through hole 119B is provided to the partition wall 109 so that the through hole pierces the intake pipe 116B from the rear.

For the air cleaner 117 arranged in the front of the running wind passage 110, a cleaner element 122 is housed in a cleaner case 121 extended longitudinally along the floor tunnel 102 and forming a part of the top of the floor tunnel 102 to partition the cleaner case 121 into a front unpurified chamber 123 and a rear purifying chamber 124, and the intake pipes 116A, 116B are plunged into the purifying chamber 124.

The cleaner case 121 is provided with a case front 121a vertically extended and a case rear 121b extended backward from a lower part of the case front 121a, is formed substantially in L type when the cleaner case is viewed from the side, the cleaner element 122 is a part corresponding to a coupled part of the case front 121a and the case rear 121b and is housed and fixed in/to the cleaner case 121.

An intake pipe 125 communicating with the unpurified chamber 123 is connected to the upper end of the front of the cleaner case 121. An opening at the lower end of the intake pipe 125 is extended downward as an intake port 126 and the intake port 126 is open at the back of the head pipe 17 with which the body frame F is provided at the front end.

In a part covering both cylinder heads 31A, 31B and both head covers 32A, 32B of the engine E in the partition wall 109, an opening 127 corresponding to the opening 107 provided to the floor tunnel 102 of the body cover 98 is provided and a lid member 128 covering the opening 127 so that the opening can be opened or closed is attached to the partition wall 109.

The partition wall 109 is extended under the seat for a rider 105 provided in the rear of the body cover 98 and a fuel tank 130 covered with the seat for a rider 105 from the upside is arranged between the seat for a rider 105 and the rear of the partition wall 109.

A housing box 131 an opening at the upper end of which is closed by the seats 105, 106 so that the opening can be opened is arranged in the rear of the fuel tank 130 and under the seats 105 and 106. In addition, both right and left sides of the housing box 131 are laid on supporting parts 68a, 68a to which upper ends of the rear cushion units 70, 70 are coupled and which are formed at the upper ends of the stays 68, 68 as a flat face.

That is, the supporting parts 68a, 68a formed in upper parts of the stays 68, 68 support loads of the seats 105, 106 via the housing box 131.

A concave portion 131a for housing the cross member 69 is provided to the front of the housing box 131 in a state in which the concave portion is concave backward, a battery housing 131b which is in the shape of a hollow hole, which is under the concave portion 131a and which can be open to the housing box 131 is provided to the front of the housing box, and a battery 132 arranged between both rear frames 27 with which the body frame F is provided is housed in the battery housing 131b. In addition, the battery housing 131b is closed by a lid member 133 forming a part of the bottom wall of the housing box 131 so that the battery housing 131b can be opened.

A radiator 134 is arranged under the partition wall 109 and in the front of the first cylinder 30A and is supported by a radiator supporting frame 135 hung from the lower down frame 23 of the down frame part 18 in the body frame F.

An exhaust system 136 of the engine E is connected to the respective other sides of the first and second cylinder heads 31A, 31B and is provided with an exhaust pipe 137A connected to the other side of the first cylinder head 31A, an exhaust pipe 137B connected to the other side of the second cylinder head 31B and an exhaust muffler 138 to which both exhaust pipes 137A, 137B are connected in common.

The exhaust pipe 137A connected to the other side of the first cylinder head 31A having an axis upward in the front out of the first and second cylinder heads 31A, 31B and extended downward is attached to the first cylinder head 31A of the engine E in a position higher than the axis of the crankshaft 28, is extended backward below the footrest 101 on the right side in the direction in which the motorcycle travels out of both footrests 101, 101 with which the body cover 98 is provided, and passes outside the right cover 35 connected to the crankcase 29.

The exhaust muffler 138 is arranged on the right side of the rear wheel WR and the exhaust pipe 137A is connected to the exhaust muffler 138. The exhaust pipe 137B connected to the second cylinder head 31B is bent on the side of the exhaust muffler 138 via the downside of the rear of the transmission case 36.

An exhaust pipe cover 139 covering the exhaust pipe 137A from the outside is fastened on the way of the exhaust pipe 137A connecting the first cylinder head 31A and the exhaust muffler 138 and is coupled to the skirt 103 hung from the outside edge of the footrest 101 on the right side so that the skirt and the footrest are integrated apparently.

Next, to explain the action of the first embodiment, the body frame F is provided with a pair of right and left down frame parts 18 extended downward backward from the head pipe 17 supporting the front wheel WF so that the front wheel can be steered and the V-type engine E provided with the first and second cylinders 30A, 30B arranged in V type when the cylinders are viewed from the side is attached to the down frame parts 18. In addition, the engine E is covered with the body cover 98 where a pair of right and left footrests 101, 101 and the floor tunnel 102 rising upward between the footrests 101, 101 are formed, both cylinders 30A, 30B are arranged longitudinally with the cylinders directed upward along the inside face of the floor tunnel 102, and both down frame parts 18 are arranged on both sides of the first cylinder 30A in the floor tunnel 102.

Therefore, an angle between the first and second cylinders 30A, 30B can be set to a large value, even if the width in the direction along the axis of the crankshaft 28 of the engine E is set to a relatively small value, no interference is caused between both cylinders 30A, 30B, therefore, the engine E can be arranged close to the front, setting the body width of the front to a relatively small value, not only the driving performance in the sport mode can be enhanced but each width of the footrests 101, 101 is secured and the ride comfort can be enhanced respectively by enabling setting the width of the floor tunnel 102 to a relatively small value.

A pair of right and left down frame parts 18 are linearly extended when the down frame parts are viewed from the side between the first cylinder 30A arranged on the front side of both cylinders 30A, 30B and the head pipe 17 without expanding the body width of the front or securing each width of the footrests 101, 101, hereby, the shape of the down frame part 18 is simplified and the rigidity can be enhanced and the down frame part 18 can be lightened.

The extended frame parts 19 extended backward from the upside of the first cylinder 30A via both sides of the second cylinder 30B on the rear side are coupled to the rear ends of the upper frames of the down frame parts 18, however, as both cylinders 30A, 30B are arranged apart longitudinally by setting an angle between the first and second cylinders 30A, 30B to a large value as described above, it can be avoided that the extended frame part 19 is bent and locations welded to the other member are increased and the lightening of the extended frame part 19 and the increase of the rigidity are enabled.

In addition, the crankcase 29 of the engine E is attached to the down frame part 18 so that the engine E forms a part of the diamond body frame F, only the front first cylinder 30A of both cylinders 30A, 30B is located in a position corresponding to the down frame part 18 to facilitate the connection of the down frame part 18 to the crankcase 29, the number of parts is reduced by forming a part of the body frame F by the engine E and the whole body can be more lightened, securing space for the footrest.

The transmission pulley on the driving side 40 of the belt-type continuously variable transmission 39 which can shift the rotating power of the crankshaft 28 steplessly and transmit it to the rear wheel WR is installed at one end of the crankshaft 28 of the engine E and the cam chain chamber 94 for running the cam chain 93 for transmitting power to the camshaft 78 of the valve system 77 corresponding to each cylinder 30A, 30B is respectively formed in the first and second cylinders 30A, 30B, however, the second cylinder axis C2 of the second cylinder 30B is arranged on the reverse side to the belt-type continuously variable transmission 39 with the first cylinder axis C1 of the first cylinder 30A between them and the cam chain chamber 94 of the second cylinder 30B is arranged on the reverse side to the belt-type continuously variable transmission 39 based upon the second cylinder axis C2.

According to such arrangement, as the cam chain chamber 94 of the second cylinder 30B is not arranged between the second cylinder axis C2 of the second cylinder 30B on the rear side and the belt-type continuously variable transmission 39 extended from the engine E to the rear side, an interval between the second cylinder 30B and the belt-type continuously variable transmission 39 can be also set to a relatively large value as shown in Fig. 3 without increasing the width of the engine E in simple structure that the transmission pulley on the driving side 40 of the belt-type continuously variable transmission 39 is directly attached to the crankshaft 28, running wind fully passes between the second cylinder 30B and the belt-type continuously variable transmission 39, the cooling efficiency of the belt-type continuously variable transmission 39 is enhanced and the durability of the continuously variable transmission 39 can be enhanced.

In addition, as the transmission pulley on the driving side 40 is provided with the fixed pulley half 44 fixed to the crankshaft 28 and the slidable variable pulley half 45 which can approach the fixed pulley half 44 or separate from it and which is supported by the crankshaft 28 and the fixed pulley half 44 is arranged closer to the second cylinder 30B than the movable pulley half 45, the belt without an end 43 which is a component of the continuously variable transmission 39 is located in a farther position from the second cylinder 30B in low-speed running in which running wind is weak and it is advantageous to cool the belt 43.

As the spark plug 95 is respectively attached to the first and second cylinder heads 31A, 31B connected to the first and second cylinders 30A, 30B on the reverse side to each cam chain chamber 94 based upon the cylinder axis C1, C2 of each cylinder 30A, 30B, the cam chain 93 does not prevent the maintenance of the spark plug 95 and the operability in the maintenance of the spark plug 95 becomes satisfactory. As the cam chain chamber 94 of the first cylinder 30A and the cam chain chamber 94 of the second cylinder 30B are arranged on both right and left sides of the engine E, the right side wall from the first cylinder 30A to the first head cover 32A via the first cylinder head 31A of the engine E and the left side wall from the second cylinder 30B to the second head cover 32B via the second cylinder head 31B of the engine E are formed so that the walls are substantially flat, efficiency in mounting the engine E on the side of the body is enhanced and the motorcycle can be miniaturized.

In addition, the width of the floor tunnel 102 can be more reduced by making the side wall on the reverse side to side on which each spark plug 95, 95 is arranged substantially flat out of both side walls of the cylinders 30A, 30B and the cylinder heads 31A, 31B as described above and further, on the side on which each spark plug 95, 95 is arranged, space enough to make cooling wind flow between the inside face of the floor tunnel 102 and the cylinder 30A or 30B and the cylinder head 31A or 31B can be secured.

The cylinder 30A or 30B and the cylinder head 31A or 31B of the engine E are arranged along the inside face of the floor tunnel 102 with which the body cover 98 is provided, the opening 107 for the maintenance of the spark plug 95 of each cylinder head 31A, 31B is provided to the side of the floor tunnel 102 so that the opening can be opened or closed by the lid member 108, and the opening 127 corresponding to the opening 107 is also provided to the partition wall 109 covering the engine E and fixed in the floor tunnel 102 so that the opening 127 can be opened or closed.

Therefore, the spark plug 95 is located in a position corresponding to the side of the floor tunnel 102, can be checked and maintained easily and without contaminating an operator by opening the openings 107 and 127 and the workability in checking and maintaining the spark plug 95 can be enhanced. In addition, as the side of the floor tunnel 102 does not require the rigidity of the footrests 101, 101, no problem related to the rigidity is caused even if the opening 107 for maintenance is provided to the floor tunnel 102 and the rigidity of the footrests 101, 101 can be also secured.

In addition, as the engine E is an SOHC-type engine, the floor tunnel 102 can be miniaturized by preventing each cylinder head 31A, 31B from being large-sized and the ease of egress and ingress can be enhanced.

The valve system 77 housed between each cylinder head 31A, 31B and each head cover 32A, 32B is formed so that tappet clearance can be adjusted and the adjusting members 83, 84 for adjusting tappet clearance are arranged on the outside face of each head cover 32A, 32B in a position corresponding to the opening 107 of the floor tunnel 102. Therefore, tappet clearance in the valve system 77 can be easily adjusted utilizing the opening 107 and the opening 127 of the partition wall 109.

The intake system 114 of the engine E is connected to each one side between both cylinder heads 31A, 31B of both cylinder heads 31A, 31B, the exhaust system 136 is connected to each other side of both cylinder heads 31A, 31B, thereby the intake system 114 can be arranged in the floor tunnel 102 and the exhaust system 136 can be arranged in space before and after the engine E reasonably.

In addition, as the air cleaner 117 forming a part of the intake system 114 is formed in a shape extended longitudinally along the floor tunnel 102, the length and the volume of the intake pipe of the intake system 114 are fully secured the performance of the engine E can be enhanced.

The air cleaner 117 is arranged over the first cylinder head 31A connected to the first cylinder 30A having the first cylinder axis C1 inclined upward forward, is provided with the cleaner case 121 forming a part of the floor tunnel 102 and extended longitudinally, the volume of the air cleaner 117 is fully secured, keeping satisfactory ride comfort which is an advantage of the scooter-type motorcycle and the displacement and the output of the engine E can be increased. In addition, as the air cleaner 117 does not interrupt the front of the engine E, performance for cooling the engine E by running wind can be enhanced and further, the ease of maintenance around the first cylinder head 31A in the engine E can be also enhanced.

The radiator 134 is arranged in the front of the first cylinder 30A, and the air cleaner 117 and the radiator 134 can be efficiently arranged along space among the engine E, the front wheel WF and the floor tunnel 102.

The cleaner case 121 is provided with the case front 121a vertically extended and the case rear 121b extended backward from the lower part of the case front 121a, is formed substantially in the L type when the cleaner case is viewed from the side, space in the rear of the head pipe 17 at the front end of the body frame F can be secured largely as space on the side of the unpurified chamber 123 in the air cleaner 117 and can contribute to the reduction of intake noise and the enhancement of the output of the engine.

Further, as the intake port 126 of the air cleaner 117 is open to the back of the head pipe 17, the intake of dust into the air cleaner 117 can be possibly avoided.

The height of the right and left footrests 101, 101 is defined by the transmission pulley on the driving side 40 and the AC generator 63 respectively installed at both ends of the crankshaft 28, however, the exhaust pipe 137A extended downward from the other side of the first cylinder head 31A on the front side is extended backward below the footrest 101 on the right side out of both footrests 101, 101 and passes outside the right cover 35 covering the transmission pulley on the driving side 40 and connected to the crankcase 29.

Therefore, as there is no exhaust pipe 137A under the crankcase 29 and the crankshaft 28 can be lowered by the quantity, the crankshaft 28 can be possibly arranged on the front side, preventing the footrests 101, 101 from being located in a high position, thereby the ride comfort of the scooter-type motorcycle can be made comfortable and in addition, space enough to arrange the intake system 114 can be secured over the engine E by lowering the crankshaft 28.

As the exhaust pipe cover 139 for covering the exhaust pipe 137A from the outside is fastened on the way of the exhaust pipe 137A and is coupled to the skirt 103 integrated with the outside edge of one footrest 101 and hung downward, large-sizing the exhaust pipe cover 139 can be avoided, keeping excellent appearance by making the exhaust pipe cover 139 inconspicuous and the flow of air along the outside face of the skirt 103 can be prevented from being disturbed.

In addition, as a position in which the exhaust pipe 137A is attached to the engine E having the first cylinder axis C1 inclined upward forward from the crankcase 29 is set so that the position is higher than the axis of the crankshaft 28, the piping in the skirt 103 of the exhaust pipe 137A becomes satisfactory, thereby the bending of the exhaust pipe 137A is increased and can contribute to the enhancement of the output of the engine.

As the partition wall 109 covering the engine E from the upside forms the running wind passage 110 between the inside face of the body cover 98 and the partition wall and is fixed in the body cover 98 covering the engine E and the running wind passage 110 is formed in an upper part of the body cover 98 by partitioning the engine E which is an exothermic source and the running wind passage by the partition wall 109, accessories can be cooled by running wind by arranging the accessories influenced by heat in the running wind passage 110 and heat from the engine E can be prevented from having an effect upon the accessories. As the engine E is doubly covered with the partition wall 109 and the body cover 98, the partition wall can also contribute to the reduction of noise and can also contribute to the enhancement of the environment of the rider against heat.

In addition, as the partition wall 109 is provided between the air cleaner 117 and the engine E, a dedicated heat insulator is not required to be particularly provided, the effect of heat from the engine E upon the air cleaner 117 can be inhibited and the deterioration by the rise of intake air temperature of the output of the engine is hardly caused.

Also, as the partition wall 109 is extended to the downside of the seats 105, 106 provided in the rear of the body cover 98 and the fuel tank 130 is arranged among the seats 105, 106 and the rear of the partition wall 109, an effect by heat from the engine E can be prevented from having upon the fuel tank 130, and the deterioration of fuel in the fuel tank 130 and the unstabilization of a flow rate can be inhibited.

Further, as the radiator 134 is arranged under the partition wall 109, an effect by outgoing radiation from the radiator 134 can be prevented from having upon other accessories.

The body frame F is provided with a pair of rear frames 27 in the rear and a pair of right and left stays 68, 68 rising upward from both rear frames 27 and fastened to each rear frame 27 are mutually coupled via the cross member 69. In the meantime, a pair of right and left rocking arms 65, 65 supporting the rear wheel WR and supported by the body frame F so that the rocking arm can be rocked are arranged on both sides of the rear wheel WR, and the rear cushion unit 70 arranged outside the stay 68 and the rocking arm 65 is provided between each stay 68 and each rocking arm 65.

Therefore, a pair of right and left stays 68, 68 and the cross member 69 can be coupled in the shape of a gate, a load from the rear cushion units 70, 70 can be efficiently received by the rear frames 27, the cushion stroke of the rear cushion units 70, 70 can be set to a large value, arranging the rear cushion unit in the rear of the body with the rear frame 27 located in a relatively low position, in addition, space between both rear frames 27 is effectively utilized and the capacity of the housing box 131 arranged between both rear frames 27 can be set to a large value.

As the battery 132 is arranged between the both rear frames 27, the battery 132 the weight of which is relatively large is arranged in the center of the width of the body and the ride comfort can be enhanced.

The upper end of each rear cushion unit 70 is coupled to the stay 68 via the extended part of each end of the cross member 69, the strength of the coupled part of the rear cushion unit 70 and the stay 68 is increased by the cross member 69 and the load from the rear cushion units 70, 70 can be more effectively received.

The supporting part 68a for supporting a load of the seats 105, 106 is formed in an upper part of the stay 68 and a load of the rider can be efficiently supported by the rear cushion unit 70.

In addition, as the seats 105, 106 closing the opening at the upper end of the housing box 131 so that the opening can be opened are provided on the housing box 131, both stays 68, 68 are formed so that an interval between the stays 68, 68 is larger at least at the upper end than an interval between both rear frames 27, the supporting part 68a is formed at the upper end of each stay 68, 68 and both right and left sides of the housing box 131 are supported on each supporting part 68a, the housing box 131 can be more stably supported, enabling setting the width of the housing box 131 to a larger value and increasing the capacity more and the load of the rider and/or the fellow passenger on the seat for a rider 105 and the seat for a fellow passenger 106 can be efficiently supported by the rear cushion units 70.

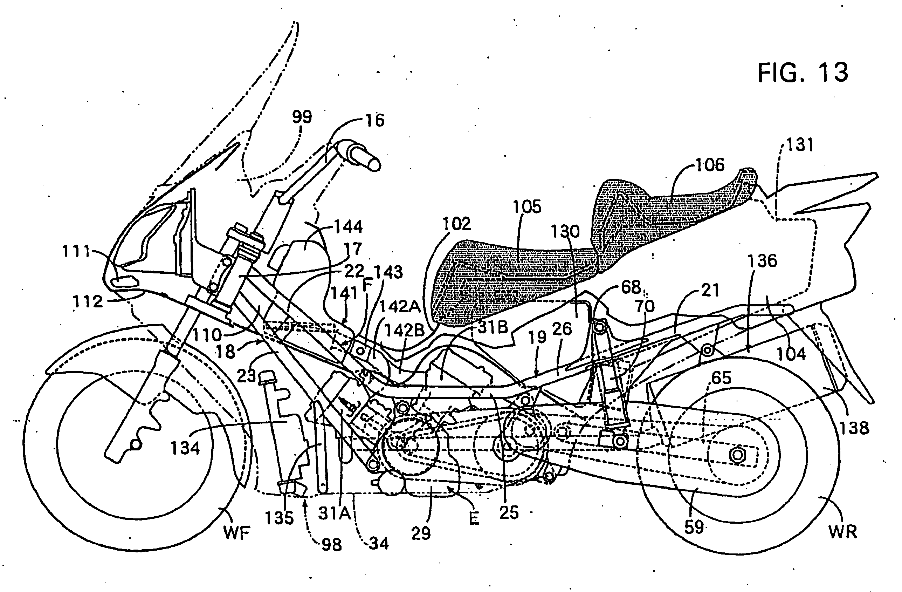

Fig. 13 shows a second embodiment of the invention and the same reference number is allocated to a part corresponding to the part in the first embodiment.

An intake system 141 of an engine E is provided wi th intake pipes 142A, 142B the respective downstream ends of which are connected to the respective one sides between first and second cylinder heads 31A, 31B of the cylinder heads 31A, 31B and which pierce a partition wall 109, throttle bodies 143 the downstream ends of which are connected to the upstream end of each intake pipe 142A, 142B and an air cleaner 144 to which the throttle bodies are connected in common and which is arranged above the first cylinder head 31A, and the air cleaner 144 is formed substantially in L type along a floor tunnel 102 in the front of the floor tunnel 102.

In the second embodiment as in the first embodiment, the performance of the engine can be also enhanced, securing the length and the volume of each intake pipe of the intake system 141 enough.

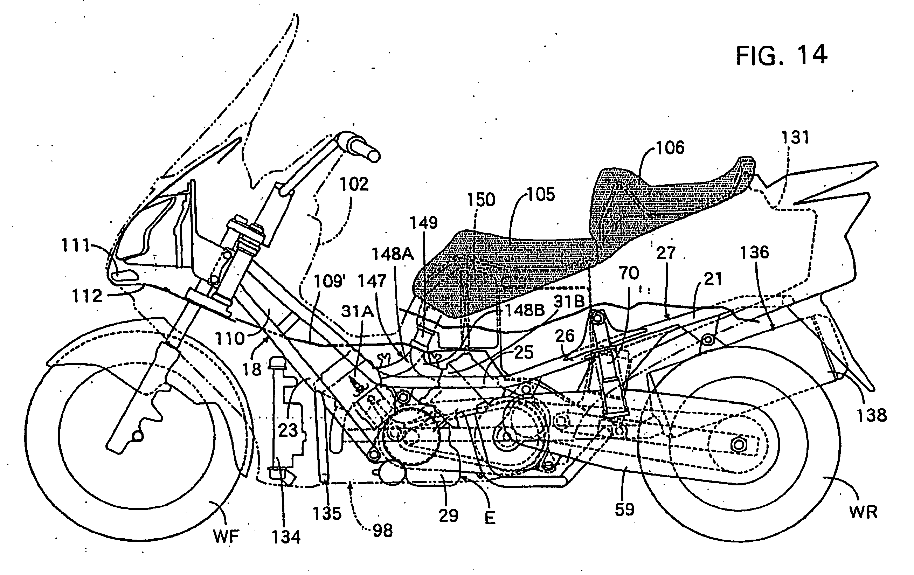

Fig. 14 shows a third embodiment of the invention and the same reference number is allocated to a part corresponding to the part in each embodiment described above.

An intake system 147 of an engine E is provided with intake pipes 148A, 148B the respective downstream ends of which are connected to the respective one sides between first and second cylinder heads 31A, 31B of the cylinder heads 31A, 31B and which pierce a partition wall 109', throttle bodies 149 the respective downstream ends of which are connected to the upstream ends of the intake pipes 148A, 1488 and an air cleaner 150 to which the throttle bodies are connected in common, and the air cleaner 150 is arranged under a seat for a rider 105 along a floor tunnel 102 in the rear of the floor tunnel 102.

According to the third embodiment as in the first and second embodiments, the performance of the engine can be also enhanced, securing the length and the volume of the intake pipe of the intake system 147 enough.

The embodiments of the invention are described above, however, the invention is not limited to the embodiments and the various variations of design that do not deviate from the invention described in Claims are allowed.

For example, in the embodiments described above, the fuel tank 130 is arranged between the seat for a rider 105 and the rear of the partition wall 109, however, a housing tank 132 may be also arranged and both the fuel tank 130 and the housing tank 132 may be also arranged. In case the housing tank 132 is arranged, heat can be prevented from having an effect upon a thing housed in the housing box 131.

As described above, the accessories can be cooled by running wind by arranging the accessories influenced by heat in the running wind passage and heat from the engine can be prevented from halving an effect upon the accessories. The invention can also contribute to the reduction of noise and the enhancement of the comfort of a rider in thermal environment.

Furthermore a dedicated heat insulator is not required to be particularly provided, heat from the engine can be prevented from having an effect upon the intake system and the output of the engine is never deteriorated by the rise of intake temperature.

Furthermore, heat from the engine can be prevented from having an effect upon at least either the fuel tank or the housing box, in the case of the fuel tank, the deterioration of fuel and the instability of a flow rate can be prevented from being caused and in the case of the housing box, heat can be prevented from having an effect upon a housed thing in the housing box.

Furthermore, heat radiation from the radiator can be prevented from having an effect upon other accessories.

Furthermore, the volume of the air cleaner is fully secured, keeping ride comfort which is an advantage of the scooter-type motorcycle and the displacement and output of the engine can be increased. In addition, the cooling performance of the engine by running wind can be enhanced and ease of maintenance around the cylinder head can be also enhanced.

Furthermore , the air cleaner and the radiator can be efficiently arranged along the space among the engine, the front wheel and the floor tunnel.

Furthermore, the space in the rear of the head pipe at the front end of the body frame can be largely secured as upstream space in the air cleaner and it can contribute to the reduction of intake noise and the enhancement of the output of the engine.

Furthermore, the intake of durst into the air cleaner can be possibly avoided.

Furthermore an angle between a pair of the cylinders can be set to a large value, the engine can be arranged close to the front, setting the body width of the front to a relatively small value, the driving performance in the sport mode can be enhanced, in addition, the width of the footrest is secured and the ride comfort can be enhanced.

Furthermore, the intake system can be arranged in the floor tunnel and the exhaust system can be arranged in space before and after the engine reasonably.

Furthermore, the performance of the engine can be enhanced, securing the length and the volume of the intake pipe of the intake system enough.
1. Subject : In a scooter-type motorcycle in which an engine is covered with a body cover provided with a pair of right and left footrests and a floor tunnel rising upward between the footrests, heat from the engine is prevented from having a bad effect upon accessories which may have a bad effect upon the performance of the engine,by the rise of temperature. Solving Means: cylinders 30A, 30B with which the engine E is provided are arranged along the inside face of the floor tunnel 102, a partition wall 109 covering the engine E from the upside forms a running wind passage 110 between the partition wall and the inside face of the body cover 98 and is fixed in the body cover 98.
2. Subject : The invention is based upon a scooter-type motorcycle wherein an engine provided with a cylinder the cylinder axis of which is inclined upward forward is covered with a body cover in which a pair of right and left footrests and a floor tunnel rising upward between the footrests are formed and is characterized in that the cooling performance of the engine is enhanced, fully securing the volume of an air cleaner. Solving Means: The air cleaner 117 forming a part of the floor tunnel 102 and provided with a cleaner case 121 extended longitudinally is arranged over a cylinder head 31A connected to the cylinder 30A.
3. Subject: To enable setting the body width of the front to a relatively small value in a scooter-type motorcycle that a V-type engine provided with a pair of cylinders arranged in V type when the cylinders are viewed from the side and a pair of cylinder heads connected to the cylinders is covered with a body cover where a pair of right and left footrests and a floor tunnel rising upward-between the footrests are formed. Solving Means: Both cylinders 30A, 30B of the engine E are arranged longitudinally with the cylinders directed upward along the inside face of the floor tunnel 102.

## Claims

1. A scooter-type motorcycle in which a V-type engine (E) provided with a crankcase (29), a pair of cylinders (30A, 30B) coupled to the crankcase (29) and arranged longitudinally and in V type when the engine (E) is viewed from the side, and a pair of cylinder heads (31A, 31 B) connected to the cylinders (30A, 30B) is covered with a body cover (98) where a pair of right and left footrests (101) and a floor tunnel (102) rising upward between the footrests (101) are formed, and an intake system (114; 141; 147) is connected to both cylinder heads (31A, 31B),
**characterized in that**
both cylinders (30A, 30B) of the engine (E) are directed upward along the inside face of the floor tunnel (102), wherein a first cylinder (30A) of the engine (E) extends upward to the front from the crankcase (29) and a second cylinder (30B) extends upward to the rear from the crankcase (29), and the intake system (114; 141; 147) is connected to the sides of both cylinder heads (31A, 31 B) facing towards each other.

2. The scooter-type motorcycle according to Claim 1, wherein:
an exhaust system (136) is connected to the other sides of both cylinder heads (31A, 31 B).

3. The scooter-type motorcycle according to Claim 1 or 2, wherein:
an air cleaner (117; 144; 150) forming a part of the intake system (114; 141; 147) is arranged along the floor tunnel (102).

4. The scooter-type motorcycle according to Claim 3, wherein:
the air cleaner (117; 144; 146) is provided with a cleaner case (121; 145; 147) forming a part of the floor tunnel (102) and extended longitudinally.

5. The scooter-type motorcycle according to Claim 4, wherein:
the air cleaner (117; 144; 146) is arranged over the cylinder head (31 A)
connected to the cylinder (30A) the cylinder axis (C1) of which is inclined upward forward.

6. The scooter-type motorcycle according to Claim 5, wherein:
a radiator (134) is arranged in the front of the cylinder (30A).

7. The scooter-type motorcycle according to Claims 4 to 6, wherein:
the cleaner case (121) is provided with a case front (121a) vertically extended and a case rear (121b) extended backward from the downside of the case front (121 a); and the cleaner case (121) is formed substantially in L type when it is viewed from the side.

8. The scooter-type motorcycle according to Claim 1, wherein:
a partition wall (109) covering the engine (E) from the upside forms a running wind passage (110) between the partition wall (109) and the inside face of the body cover (98) and is fixed in the body cover (98).

9. The scooter-type motorcycle according to Claim 8, wherein:
the partition wall (109) is provided between the V-type engine (E) the crank axis of which is arranged sideways and an air cleaner (117; 144; 146) connected to the engine (E).

10. The scooter-type motorcycle according to Claim 8 or 9, wherein:
the partition wall (109) is extended up to the downside of a seat for a rider (105) provided to the rear of the body cover (98); and
at least either a fuel tank (130) or a housing box (131) is arranged between the seat for a rider (105) and the rear of the partition wall (109).

11. The scooter-type motorcycle according to any of Claims 8 to 10, wherein:
a radiator (134) is arranged under the partition wall (109).

12. The scooter-type motorcycle according to any of Claims 9 to 11, wherein:
an intake (126) of the air cleaner (117; 144; 146) is open at the back of a head pipe (17) with which a body frame (F) is provided at the front end.

## Patentansprüche

1. Kraftrad vom Scooter-Typ, bei dem ein Motor vom V-Typ (E), welcher versehen ist mit einem Kurbelgehäuse (29), einem Paar von Zylindern (30A, 30B), welche mit dem Kurbelgehäuse (29) gekoppelt sind und in Längsrichtung und im V-Typ angeordnet sind, wenn der Motor (E) von der Seite her betrachtet wird, und einem Paar von Zylinderköpfen (31 A, 31B), welche mit den Zylindern (30A, 30B) verbunden sind, mit einer Körperabdeckung (98) abgedeckt ist, wo ein Paar von rechten und linken Fußrasten (101) und ein zwischen den Fußrasten (101) nach oben ansteigender Bodentunnel (102) ausgebildet sind und ein Einlasssystem (114; 141; 147) mit beiden Zylinderköpfen (31A, 31B) verbunden ist,
**dadurch gekennzeichnet,**
**dass** beide Zylinder (30A, 30B) des Motors (E) längs der Innenfläche des Bodentunnels (102) nach oben gerichtet sind, wobei sich ein erster Zylinder (30A) des Motors (E) von dem Kurbelgehäuse (29) aus nach oben zur Vorderseite hin erstreckt und sich ein zweiter Zylinder (30B) von dem Kurbelgehäuse (29) aus nach oben zur Rückseite hin erstreckt und wobei das Einlasssystem (114; 141; 147) mit den zueinander weisenden Seiten von beiden Zylinderköpfen (31 A, 31B) verbunden ist.

2. Kraftrad vom Scooter-Typ gemäß Anspruch 1, wobei:
ein Auspuffsystem (136) mit den anderen Seiten von beiden Zylinderköpfen (31A, 31B) verbunden ist.

3. Kraftrad vom Scooter-Typ gemäß Anspruch 1 oder 2, wobei:
ein Luftfilter (117; 144; 150), welcher einen Teil des Einlasssystems (114; 141; 147) bildet, längs des Bodentunnels (102) angeordnet ist.

4. Kraftrad vom Scooter-Typ gemäß Anspruch 3, wobei:
der Luftfilter (117; 144; 146) mit einem Filtergehäuse (121; 145; 147) versehen ist, welches einen Teil des Bodentunnels (102) bildet und in Längsrichtung ausgestreckt ist.

5. Kraftrad vom Scooter-Typ gemäß Anspruch 4, wobei:
der Luftfilter (117; 144; 146) über dem Zylinderkopf (31A) angeordnet ist, welcher mit dem Zylinder (30A) verbunden ist, dessen Zylinderachse (C1) nach oben und nach vorne geneigt ist.

6. Kraftrad vom Scooter-Typ gemäß Anspruch 5, wobei:
ein Kühler (134) vor dem Zylinder (30A) angeordnet ist.

7. Kraftrad vom Scooter-Typ gemäß Ansprüchen 4 bis 6, wobei:
das Filtergehäuse (121) versehen ist mit einer Gehäusevorderseite (121 a), welche vertikal ausgestreckt ist, und einer Gehäuserückseite (121b), welche von der Unterseite der Gehäusevorderseite (121 a) nach hinten ausgestreckt ist; und das Filtergehäuse (121) im Wesentlichen in der Art eines L ausgebildet ist, wenn es von der Seite her betrachtet wird.

8. Kraftrad vom Scooter-Typ gemäß Anspruch 1, wobei:
eine Trennwand (109), welche den Motor (E) von der Oberseite her abdeckt, einen Fahrtwinddurchgang (110) zwischen der Trennwand (109) und der Innenfläche der Körperabdeckung (98) bildet und in der Körperabdeckung (98) befestigt ist.

9. Kraftrad vom Scooter-Typ gemäß Anspruch 8, wobei:
die Trennwand (109) zwischen dem Motor vom V-Typ (E), dessen Kurbelachse seitlich angeordnet ist, und einem mit dem Motor (E) verbundenen Luftfilter (117; 144; 146) vorgesehen ist.

10. Kraftrad vom Scooter-Typ gemäß Anspruch 8 oder 9, wobei:
die Trennwand (109) nach oben bis zur Unterseite eines Sitzes für einen Fahrer (105) ausgestreckt ist, welcher an der Rückseite der Körperabdeckung (98) vorgesehen ist; und
wenigstens entweder ein Kraftstofftank (130) oder ein Gehäusekasten (131) zwischen dem Sitz für einen Fahrer (105) und der Rückseite der Trennwand (109) angeordnet ist.

11. Kraftrad vom Scooter-Typ gemäß einem der Ansprüche 8 bis 10, wobei:
ein Kühler (134) unter der Trennwand (109) angeordnet ist.

12. Kraftrad vom Scooter-Typ gemäß einem der Ansprüche 9 bis 11, wobei:
ein Einlass (126) von dem Luftfilter (117; 144; 146) an der Rückseite eines Kopfrohrs (17) offen ist, mit welchem ein Rumpfrahmen (F) an dem vorderen Ende versehen ist.

## Revendications

1. Motocycle de type scooter dans lequel un moteur de type en V (E) comprenant un carter moteur (29), une paire de cylindres (30A, 30B) accouplés au carter moteur (29) et aménagés de manière longitudinale et en V lorsque le moteur (E) est vu de côté, et une paire de culasses (31A, 31B) connectées aux cylindres (30A, 30B) est recouvert par un carénage de corps (98) dans lequel sont formés une paire de repose-pied droit et gauche (101) et un tunnel de plancher (102) qui s'étend vers le haut entre les repose-pied (101), et dans lequel un système d'admission (114 ; 141 ; 147) est connecté aux deux culasses (31A, 31B),
**caractérisé en ce que** :
les deux cylindres (30A, 30B) du moteur (E) sont dirigés vers le haut le long d'une face interne du tunnel de plancher (102), dans lequel un premier cylindre (30A) du moteur (E) s'étend vers le haut et vers l'avant à partir du carter moteur (29) et un second cylindre (30B) s'étend vers le haut et vers l'arrière à partir du carter moteur (29), et **en ce que** le système d'admission (114 ; 141 ; 147) est connecté sur les côtés des deux culasses (31A, 31B) qui se font face l'une par rapport à l'autre.

2. Motocycle de type scooter selon la revendication 1, dans lequel :
un système d'échappement (136) est connecté sur les autres côtés des deux culasses (31A, 31B).

3. Motocycle de type scooter selon la revendication 1 ou la revendication 2, dans lequel :
un filtre à air (117 ; 144 ; 150), qui forme une partie du système d'admission (114 ; 141 ; 147), est aménagé le long du tunnel de plancher (102).

4. Motocycle de type scooter selon la revendication 3, dans lequel :
le filtre à air (117 ; 144 ; 146) comporte un carter de filtre à air (121 ; 145 ; 147) qui forme une partie du tunnel de plancher (102) et qui s'étend de manière longitudinale.

5. Motocycle de type scooter selon la revendication 4, dans lequel :
le filtre à air (117 ; 144 ; 146) est disposé au dessus de la culasse (31A) qui est connectée au cylindre (30A) dont l'axe de cylindre (C1) est incliné vers le haut et vers l'avant.

6. Motocycle de type scooter selon la revendication 5, dans lequel :
un radiateur (134) est aménagé à l'avant du cylindre (30A).

7. Motocycle de type scooter selon les revendications 4 à 6, dans lequel :
le carter de filtre à air (121) comporte une partie avant de carter (121a) qui s'étend verticalement et une partie arrière de carter (121b) qui s'étend vers l'arrière à partir du côté inférieur de la partie avant de carter (121a) ; et
dans lequel le carter de filtre à air (121) a une forme essentiellement de type en L lorsqu'il est vu de côté.

8. Motocycle de type scooter selon la revendication 1, dans lequel :
une paroi de séparation (109), qui recouvre le moteur (E) à partir du côté supérieur, forme un passage d'alimentation en air (110) entre la paroi de séparation (109) et la face interne du carénage de corps (98) et est fixée dans le carénage de corps (98).

9. Motocycle de type scooter selon la revendication 8, dans lequel :
la paroi de séparation (109) est disposée entre le moteur de type en V (E), dont l'axe de vilebrequin est aménagé sur les côtés, et un filtre à air (117 ; 144 ; 146) connecté au moteur (E).

10. Motocycle de type scooter selon la revendication 8 ou la revendication 9, dans lequel :
la paroi de séparation (109) s'étend jusqu'au côté inférieur d'une selle destinée à un conducteur (105) aménagée à l'arrière du carénage de corps (98) ; et
au moins l'un d'un réservoir de carburant (130) ou d'un coffre de rangement (131) est aménagé entre la selle destinée à un conducteur (105) et l'arrière de la paroi de séparation (109).

11. Motocycle de type scooter selon l'une quelconque des revendications 8 à 10, dans lequel :
un radiateur (134) est aménagé en dessous de la paroi de séparation (109).

12. Motocycle de type scooter selon l'une quelconque des revendications 9 à 11, dans lequel :
une admission d'air (126) destinée au filtre à air (117 ; 144 ; 146) est ouverte à l'arrière d'un tube de tête (17) que comporte un cadre de corps (F) à son extrémité avant.
